# EUROPÄISCHE PATENTANMELDUNG

(11) **EP 4 241 944 A1**
(43) Veröffentlichungstag der Anmeldung: **13.09.2023**
(21) Anmeldenummer: 23159525.7
(22) Anmeldetag: 01.03.2023
(51) Int. Cl.: B26D 7/01, B26D 7/02, B25J 15/00, B26D 7/06, B25J 9/00, B25J 11/00, B26D 5/00, B26D 11/00

(54) **VERFAHREN UND VORRICHTUNG ZUM HANDHABEN EINES STAPELS BLATTFÖRMIGEN GUTS**

(30) Priorität: 01.03.2022 DE 102022104823
(71) Anmelder: Baumann Maschinenbau Solms GmbH & Co. KG, 35606 Solms (DE)
(72) Erfinder: Schmitt, Berthold, 35638 Leun (DE); Reiter, Georg Philipp, 35792 Löhnberg (DE)
(74) Vertreter: Stoffregen, Hans-Herbert

(57) **Zusammenfassung**

Die Erfindung bezieht sich auf ein Verfahren und eine Vorrichtung zum Handhaben eines Stapels (10) blattförmigen Guts umfassend die Verfahrensschritte, Ausrichten des Stapels in einem ersten Zustand auf eine Schneidlinie eines Schneidmessers einer Schneidvorrichtung (14), Erfassen des Stapels und Ausrichten des Stapels in einem zweiten Zustand auf die Schneidlinie und Schneiden des Stapels, wobei zum Ausrichten des Stapels dieser mittels zumindest eines Greifelements (38, 40) erfasst wird. Dabei wird der Stapel (10) während des Schneidens von einem Druckelement (28) bei gleichzeitiger Unwirksamkeit des zumindest einen Greifelements (38, 40) beaufschlagt und das Druckelement während des Ausrichtens des Stapels bei gleichzeitigem Erfassen des Stapels mittels des zumindest einen Greifelements zu dem Stapel beabstandet.

## Beschreibung

Die Erfindung bezieht sich auf ein Verfahren zum Handhaben eines Stapels blattförmigen Guts, insbesondere eines Stapels von Wertpapierbogen, umfassend die Verfahrensschritte
- Ausrichten des Stapels in einem ersten Zustand auf eine Schneidlinie eines Schneidmessers einer Schneidvorrichtung und Schneiden des Stapels,
- Erfassen des Stapels und Ausrichten des Stapels in einem zweiten Zustand auf die Schneidlinie und Schneiden des Stapels, wobei zum Ausrichten des Stapels dieser mittels zumindest eines Greifelements erfasst wird.

Auch nimmt die Erfindung Bezug auf eine Vorrichtung zum Handhaben eines Stapels blattförmigen Guts, insbesondere eines Stapels von Wertpapierbogen, umfassend einen Roboterarm und eine Einrichtung zum Erfassen, Verschieben und/oder Ausrichten des Stapels zu einer Schneidlinie einer Schneidvorrichtung.

Um insbesondere Wertpapierbogen zu schneiden, ist eine hohe Genauigkeit erforderlich. Um diese sicherzustellen, wird nach der WO2021/047869 A1 vorgeschlagen, dass der Stapel fortwährend von Greifmitteln erfasst wird, also sowohl beim Verschieben als auch beim Schneiden. Nachteilig ist jedoch, dass auf Grund des durch die Greifmittel auf den Stapel einwirkenden Drucks auf eine relativ geringe Fläche, dies zu einer unerwünschten Verformung des Druckbogenstapels führen kann. Insbesondere kann dies bei Wertpapieren auftreten.

Die Greifmittel können von einem Roboter ausgehen, der entsprechend des Schneidfortschritts unterschiedliche Abstände zur Schneidlinie aufweist, so dass dem Grunde nach fortwährend eine Überprüfung erfolgen muss, ob die notwendige Ausrichtung des Stapels zur Schneidlinie zur Erzielung präziser Schnitte gegeben ist.

Eine Schneidanlage nach der DE 195 15 705 A1 weist 3 Schneidvorrichtungen auf, wobei in einer Schneidvorrichtung ein Rundumschnitt und in den anderen Schnitte in voneinander abweichenden Richtungen durchgeführt werden.

Der vorliegenden Erfindung liegt die Aufgabe zugrunde, ein Verfahren und eine Anordnung der eingangs genannten Art so weiterzubilden, dass mit hoher Präzision Stapel blattförmigen Guts geschnitten werden können, wobei Verformungen des Stapels insbesondere beim Halten des Stapels beim Schneiden vermieden werden sollen.

Auch soll das Ausrichten des Stapels zur Schneidlinie nach durchgeführten Schnitten vereinfacht werden.

Verfahrensmäßig wird die Aufgabe im Wesentlichen dadurch gelöst, dass der Stapel während des Schneidens von einem Druckelement bei gleichzeitiger Unwirksamkeit des zumindest einen Greifelementes beaufschlagt wird und dass das Druckelement während des Ausrichtens des Stapels bei gleichzeitigem Erfassen des Stapels mittels des zumindest einen Greifelements zu dem Stapel beabstandet wird.

Der erste Zustand kann derjenige sein, in dem der Stapel auf die Schneidlinie ausgerichtet ist, um einen ersten Schnitt durchzuführen. Der zweite Zustand kann derjenige sein, in dem entlang einer anderen Schnittlinie ein Schnitt durchgeführt wird. Zustand bedeutet mit anderen Worten, dass der Stapel in gewünschter Position zu der Schneidlinie positioniert ist.

Insbesondere ist vorgesehen, dass als Druckelement ein flächiges Element, wie Plattenelement, verwendet wird, das von einem Handhabungsgerät, wie Roboterarm, gehandhabt wird.

Erfindungsgemäß erfolgt beim Schneiden des Stapels eine flächige Kraftbeaufschlagung auf die Stapeloberfläche und nicht ein Klemmen im Randbereich, wie dies der Stand der Technik vorsieht. Hierdurch ist sichergestellt, dass zum einen im hinreichenden Umfang Druck auf den Stapel einwirken kann, damit beim Schneiden ein Verschieben der Bogen unterbleibt. Gleichzeitig werden Verformungen vermieden, da eine flächige Druckbeaufschlagung erfolgt.

Dabei ist insbesondere vorgesehen, dass das Druckelement in seiner Breite und/oder Länge veränderbar ausgebildet ist, so dass eine Anpassung an die Flächenerstreckung des Stapels, insbesondere auch in Abhängigkeit des Schnittfortschritts, erfolgen kann. Zum anderen kann in gewohnter Weise der Stapel zu der Schneidlinie mittels zumindest eines Greifelements verschoben werden, ohne dass das Druckelement zu einer Behinderung führt.

Damit dem Grunde nach ein einmaliges Ausrichten der Orientierung des Stapels zu der Schneidlinie ausreicht und insbesondere mit konstruktiv einfachen Maßnahmen das Wechseln zwischen Druckbeaufschlagung mittels des Druckelements und dem Erfassen des Stapels mittels des zumindest einen Greifelements verwirklicht werden kann, sieht die Erfindung in hervorzuhebender Weise vor, dass das Greifelement von dem Druckelement ausgehend betätigt wird.

Das Druckelement dient als Halterung für das zumindest eine Greifelement, so dass eine eindeutige Ortsbeziehung zwischen Druckelement und Greifelement besteht und infolgedessen ein häufiges Nachmessen bzw. Nachjustieren zum Ausrichten des Stapels auf die Schneidlinie nicht erforderlich ist, wie dies beim Stand der Technik der Fall ist.

Hierzu ist zusätzlich vorgesehen, dass als das Handhabungsgerät ein Roboterarm verwendet wird, dessen Arm mit dem Druckelement in einem Randbereich verbunden ist, der der Schneidlinie zugewandt ist. Der Abstand zwischen Angriffspunkt des Roboterarms auf das Druckelement und der Schneidlinie wird somit minimiert, so dass eine hohe Präzision beim Ausrichten und anschließenden Schneiden des Stapels gewährleistet ist. Gleichzeitig bleibt der Abstand zwischen Angriffspunkt des Roboterarms und der Schneidlinie bezogen auf die von dem Stapel aufgespannten Ebene unabhängig vom Schneidfortschritt konstant, so dass ein Nachjustieren und Nachmessen nicht erforderlich sind.

Erfindungsgemäß kann beim Schneiden mehrerer Streifen entlang parallel zueinander verlaufender Schnittlinien die Position des Druckelements bezogen auf von dem Stapel aufgespannter Ebene unverändert bleiben, so dass eine einmalige Ausrichtung dem Grunde nach ausreichend ist, um sodann die gewünschte Anzahl von Streifen zu schneiden.

Unveränderte Position ist im Sinne der Erfindung auch dann gegeben, wenn das Druckelement flächenmäßig in Abhängigkeit vom Fortschritt des Schneidens verkleinert wird, da die Position des Roboterarms in Bezug auf die von dem Stapel aufgespannte Ebene unverändert ist, wenngleich ein Anheben und Absenken des Druckelements erfolgt; denn beim Verschieben des Stapels in Bezug auf die Schneidlinie wird das Druckelement zu dem Stapel beabstandet, wohingegen beim Schneiden selbst das Druckelement auf den Stapel einwirkt und das zumindest eine Greifelement wirkungslos ist, also der Stapel durch das zumindest eine Greifelement nicht bewegt werden kann.

Insbesondere ist vorgesehen, dass der Stapel von zwei Greifelementen, wie jeweils einer Unter- und Oberbacke aufweisenden Zange, erfasst wird.

Eine Vorrichtung der eingangs genannten Art zeichnet sich insbesondere dadurch aus, dass die Einrichtung ein den Stapel druckbeaufschlagendes Druckelement sowie zumindest ein Greifelement umfasst, das relativ zu dem Druckelement verstellbar ausgebildet ist.

Dabei ist insbesondere vorgesehen, dass das Druckelement ein plattenförmiges Element ist oder umfasst, welches auf den Stapel einwirkt, von dem zumindest ein Antriebselement, wie Spindel, zum Verstellen des zumindest einen Greifelements zu dem Druckelement ausgeht.

Insbesondere ist vorgesehen, dass von gegenüberliegenden parallel zueinander verlaufenden Randbereichen des Druckelements jeweils ein Antrieb, wie Spindel, für jeweils ein Greifelement, wie eine eine Unter- und Oberbacke aufweisende Zange, ausgehen.

Um mit ein und derselben Einrichtung Stapel unterschiedlicher Flächenerstreckung druckbeaufschlagen zu können bzw. in Abhängig von dem Verlauf der Schnitte das Druckelement flächig verkleinern zu können, ist vorgesehen, dass das Druckelement insbesondere breiten- und/oder längenveränderbar ausgebildet ist, betrachtet zur von dem Stapel aufgespannten Ebene.

Hervorzuheben ist des Weiteren, dass der Roboterarm in einem Bereich mit dem Druckelement verbunden ist, der im schneidlinienzugewandten Randbereich des Druckelementes verläuft. Hierdurch ist eine einfache, jedoch hochpräzise Ausrichtung zu der Schneidlinie gewährleistet.

Das Greifelement selbst sollte pneumatisch oder elektromechanisch betätigbar sein, um beim Verschieben auf dem Hintertisch einer Schneidanlage den Stapel zu erfassen und beim Schneiden den Stapel freizugeben.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines bevorzugten Ausführungsbeispiels.

Es zeigen:

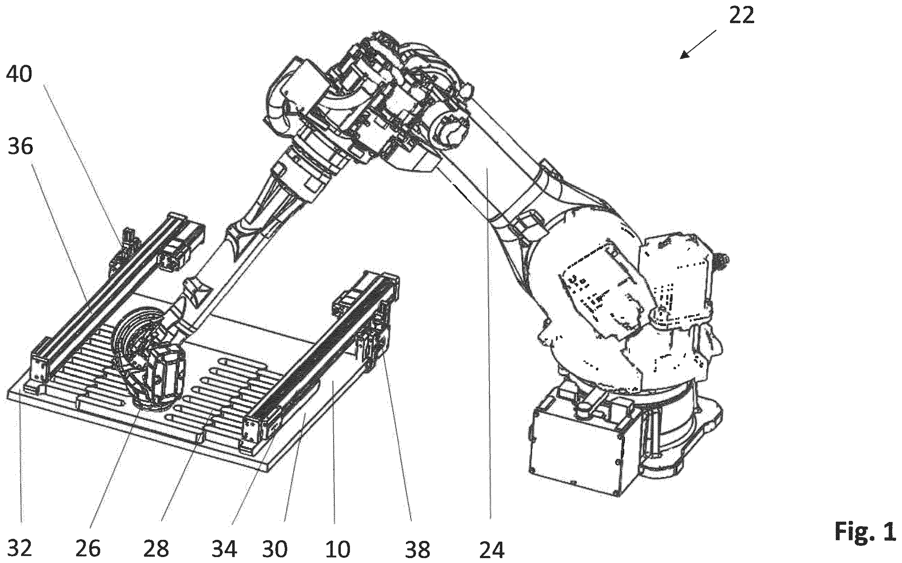

- Fig. 1: einen Roboter mit Druckelement und Greifelementen,

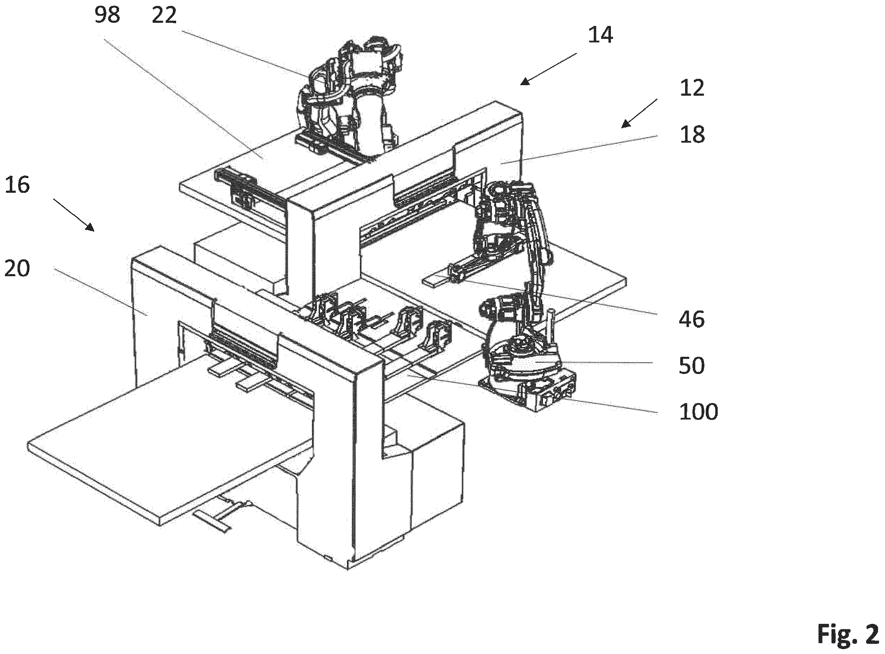

- Fig. 2: eine Schneidanlage mit zwei Robotern,

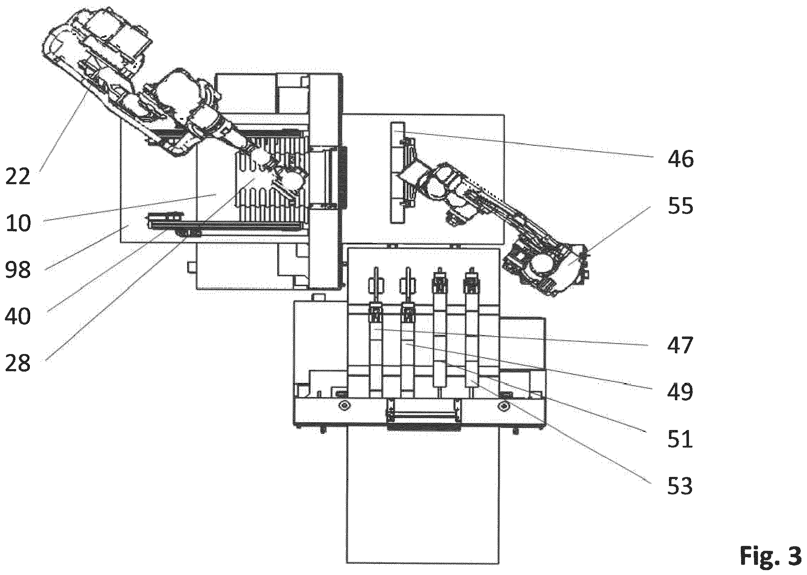

- Fig. 3: die Schneidanlage gemäß Fig. 2 in Draufsicht,

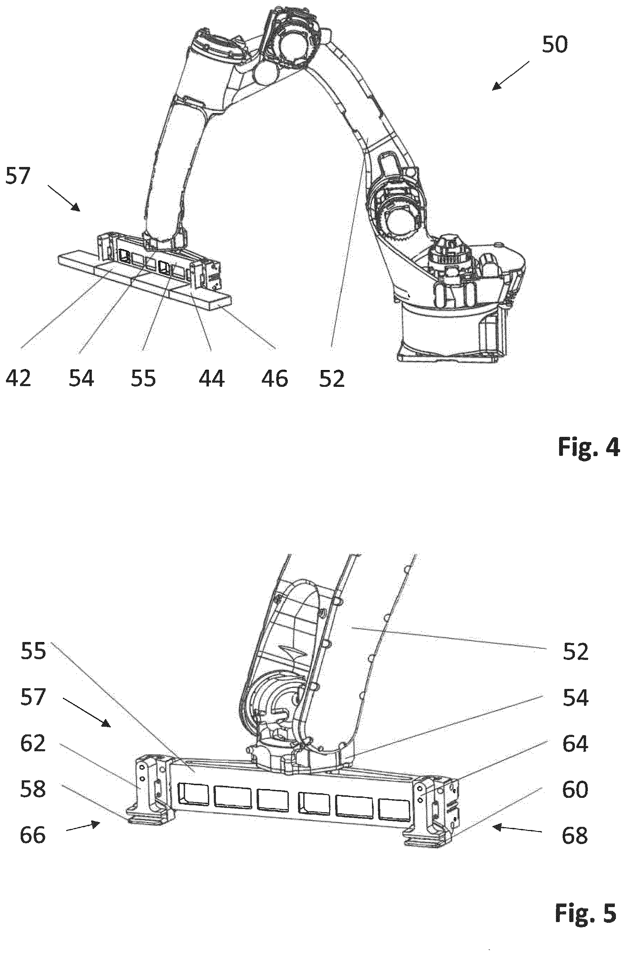

- Fig. 4: einen zweiten Roboter mit Streifen eines Stapels und
- Fig. 5: eine Zangenanordnung.

Anhand der Fig. wird die erfindungsgemäße Lehre erläutert, mit der ein Stapel 10 blattförmigen Materials, insbesondere in Form von Wertpapierbogen, in Streifen und diese in Nutzen geschnitten werden können. Der Begriff Stapel umfasst dabei auch eine Lage eines Stapels, die geschnitten werden soll. Insoweit können im Kontext der Erfindung Stapel und Lage als Synonym aufgefasst werden.

Zum Schneiden kann eine Schneidanlage 12 genutzt werden, die im Ausführungsbeispiel zwei Schneidvorrichtungen 14, 16 mit jeweils einem Portal 18, 20 aufweist, in denen Schneidmesser vertikal verstellbar angeordnet sind, die ihrerseits jeweils eine Schneidlinie erzeugen. Mit der ersten Schneidvorrichtung 14 werden der Stapel 10 in Streifen 46, 47, 49, 51, 53 und mit der zweiten Schneidvorrichtung 16 die Streifen 46, 47, 49, 51, 53 in die jeweilen Nutzen 42, 44 geschnitten.

Um den Stapel 10 auf die (erste) Schneidlinie der ersten Schneidvorrichtung 14 ordnungsgemäß auszurichten, wird ein erster Mehrachsroboter 22 mit einem Roboterarm 24 genutzt, an dessen Ende über einen Flansch 26 ein Druckelement 28 in Form einer Platte befestigt ist, die auf den Stapel 10 in nachstehend beschriebener Weise absenkbar ist.

Von dem als Platte ausgebildeten Druckelement 28, und zwar von dessen gegenüberliegenden Rändern 30, 32 bzw. Randbereichen gehen Spindelantriebe 34, 36 für als Zangen 38, 40 ausgebildete Greifelemente aus, die im erforderlichen Umfang zu dem Stapel 10 ausrichtbar sind. Dabei wird mittels der Zangen 38, 40 der Stapel 10 relativ zu der Platte 28 und zu der Schneidlinie der Schneidvorrichtung 14 verstellt, um nach ordnungsgemäßer Ausrichtung des Stapels 10 auf die erste Schneidlinie Nutzen 42, 44 aufweisende Streifen 46, 47, 49, 51, 53 zu schneiden, die sodann in die einzelnen Nutzen 42, 44 in der zweiten Schneidvorrichtung 16 geschnitten werden. Hierzu wird ein zweiter Mehrachsroboter 50 benutzt, dessen Roboterarm 52 über einen Flansch 54 mit einem Träger 55 einer Greifeinrichtung 57 verbunden ist.

Der Träger 55 weist im Ausführungsbeispiel zwei Zangen 66, 68 auf, mit einer Unterbacke 58, 60 sowie einer Oberbacke 62, 64 auf, die zu der jeweiligen Unterbacke 58, 60 verstellbar ist.

Um den Stapel 10 auf die Schneidlinie der ersten Schneidvorrichtung 14, also die erste Schneidlinie auszurichten, wird die Position des Stapels 10 unter Zuhilfenahme von auf den Bogen des Stapels 10 vorhandenen, jedoch in den Figuren nicht dargestellter Markierungen optisch erfasst und sodann die Vorderkante des zuvor rundum beschnittenen Stapels 10 parallel zur Schneidlinie der Schneidvorrichtung 14 ausgerichtet. Hierzu wird der Stapel 10 auf dem Hintertisch 98 der die Schneidvorrichtung 14 umfassenden Schneidanlage 12 mittels der Zangen 38, 40 verschoben. Dabei ist die Platte 28 zu dem Stapel 10 beabstandet. Um dies zu ermöglichen, sind die Spindelantriebe 34, 36 an der Platte 28 angelenkt, also schwenkbar mit der Platte verbunden. Nach ordnungsgemäßer Ausrichtung des Stapels 10 und Transport durch die Schneidlinie hindurch, um einen Streifen vorgegebener Breite schneiden zu können, wird das Druckelement 20 abgesenkt, um in einem Umfang einen Druck auf den Stapel 10 auszuüben, dass ein Verrutschen nicht erfolgen kann. Gleichzeitig werden die Zangen 38, 40 kraftlos geschaltet, d.h., dass eine Wirkverbindung mit dem Stapel 10 nicht mehr gegeben ist. Ungeachtet dessen bleibt eine eindeutige Ortsbeziehung zwischen den Zangen 38, 40 und der Platte 28 erhalten. Nachdem ein Streifen geschnitten worden ist, wird dieser von der als Doppelzange zu bezeichnenden Greifeinrichtung 57 erfasst und der zweiten Schneidvorrichtung 16 zugeführt. Dabei besteht die Möglichkeit, zunächst mehrere Streifen 46, 47, 49, 51, 53 auf dem Hintertisch 100 vor der zweiten Schneidvorrichtung 16 anzuordnen, um diese sodann in die Nutzen zu schneiden. Gleichzeitig können weitere Streifen vom Stapel 10 geschnitten werden, so dass ein Überlappen der Arbeitsprozesse Schneiden der Streifen und Schneiden der Nutzen von geschnittenen Streifen erzielbar ist mit der Folge, dass im Vergleich zu bekannten Konstruktionen ein höherer Durchsatz erzielbar ist.

Um die Druckplatte 28 auf unterschiedliche Breiten einzustellen, kann diese in ihrer Breite veränderbar gestaltet sein. Auch gegebenenfalls eine Längenveränderbarkeit ist möglich. Ungeachtet dessen verlaufen die Spindelantriebe 34, 36 stets parallel.

Die Zangen 38, 40 selbst können pneumatisch z.B. über entlang des Roboterarms 24 verlaufende Druckleitungen oder elektromechanisch betätigt werden, um im erforderlichen Umfang den Stapel 10 zu greifen oder diesen freizugeben.

Die Zangen 38, 40 können mit geringer Kraft den Stapel auf dem Hintertisch 98 verschieben und wirken beim Schieben zur ersten Schneidlinie hin quasi als Anschlag, so dass Verformungen des blattförmigen Materials durch die Zangen 38, 40 ausgeschlossen sind.

### Bezugszeichenliste:

- 10: Stapel
- 12: Schneidanlage
- 14: Schneidvorrichtung
- 16: Schneidvorrichtung
- 18: Portal
- 20: Portal
- 22: Roboter
- 24: Roboterarm
- 26: Flansch
- 28: Druckelement
- 30: Rand
- 32: Rand
- 34: Spindelantrieb
- 36: Spindelantrieb
- 38: Zange
- 40: Zange
- 42: Nutzen
- 44: Nutzen
- 46: Streifen
- 47: Streifen
- 49: Streifen
- 50: Mehrachsroboter
- 51: Streifen
- 52: Roboterarm
- 53: Streifen
- 54: Flansch
- 55: Träger
- 57: Greifeinrichtung
- 58: Unterbacke
- 60: Unterbacke
- 62: Oberbacke
- 64: Oberbacke
- 66: Zange
- 68: Zange

- 98: Hintertisch
- 100: Hintertisch

## Patentansprüche

1. Verfahren zum Handhaben eines Stapels (10) blattförmigen Guts, insbesondere eines Stapels von Wertpapierbogen, umfassend die Verfahrensschritte,
- Ausrichten des Stapels in einem ersten Zustand auf eine Schneidlinie eines Schneidmessers einer Schneidvorrichtung (14),
- Erfassen des Stapels und Ausrichten des Stapels in einem zweiten Zustand auf die Schneidlinie und Schneiden des Stapels, wobei zum Ausrichten des Stapels dieser mittels zumindest eines Greifelements (38, 40) erfasst wird,
**dadurch gekennzeichnet,**
**dass** der Stapel (10) während des Schneidens von einem Druckelement (28) bei gleichzeitiger Unwirksamkeit des zumindest einen Greifelements (38, 40) beaufschlagt wird und dass das Druckelement während des Ausrichtens des Stapels bei gleichzeitigem Erfassen des Stapels mittels des zumindest einen Greifelements zu dem Stapel beabstandet wird.

2. Verfahren nach Anspruch 1,
**dadurch gekennzeichnet,**
**dass** als Druckelement (28) ein flächiges Element, wie Plattenelement, verwendet wird, das von einem Handhabungsgerät (22), wie Roboter, gehandhabt wird.

3. Verfahren nach zumindest einem der vorhergehenden Ansprüche,
**dadurch gekennzeichnet,**
**dass** das zumindest eine Greifelement (38, 40) von dem Druckelement (28) ausgehend betätigt wird.

4. Verfahren nach zumindest einem der vorhergehenden Ansprüche,
**dadurch gekennzeichnet,**
**dass** der Stapel (10) von zwei Greifelementen (38, 40), die jeweils eine eine Unterbacke (58, 60) und eine Oberbacke (62, 64) aufweisende Zange sind, erfasst wird.

5. Verfahren nach zumindest einem der vorhergehenden Ansprüche,
**dadurch gekennzeichnet,**
**dass** das Druckelement (28) in seiner Breite und/oder Länge veränderbar ausgebildet wird.

6. Verfahren nach zumindest einem der vorhergehenden Ansprüche,
**dadurch gekennzeichnet,**
**dass** der Mehrachsroboter (22) über dessen Arm (24) mit dem Druckelement (28) in einem Randbereich des Druckelements verbunden wird, der schneidlinienzugewandt verläuft.

7. Verfahren nach zumindest einem der vorhergehenden Ansprüche,
**dadurch gekennzeichnet,**
**dass** der Abstand zwischen Verbindungspunkt des Roboterarms (24) und der Schneidlinie bei nacheinander durchzuführenden Schnitten konstant bleibt, betrachtet in der Ebene, die von dem Stapel (10) aufgespannt ist.

8. Vorrichtung zum Handhaben eines Stapels (10) blattförmigen Guts, insbesondere eines Stapels von Wertpapierbogen, umfassend einen Roboterarm (24) eines Roboters (22), mit einer Einrichtung (38, 40) zum Erfassen, Verschieben und/oder Ausrichten des Stapels zu einer Schneidlinie einer Schneidvorrichtung (14),
**dadurch gekennzeichnet,**
**dass** die Einrichtung ein den Stapel (10) druckbeaufschlagendes Druckelement (28) sowie zumindest eine Greifeinrichtung (38, 40) umfasst, die relativ zu dem Druckelement über einen von dem Druckelement ausgehenden Antrieb (34, 36) verstellbar ausgebildet ist.

9. Vorrichtung nach Anspruch 8,
**dadurch gekennzeichnet,**
**dass** das Druckelement (28) ein plattenförmiges Element ist, von dem das Antriebselement (34, 36), wie Spindel, ausgeht.

10. Vorrichtung nach Anspruch 8 oder 9,
**dadurch gekennzeichnet,**
**dass** von gegenüberliegenden, vorzugsweise parallel zueinander verlaufenden, Randbereichen (30, 32) des Druckelements (28) jeweils ein Antrieb (34, 36), wie Spindel, für jeweils eine Greifeinrichtung (38, 40), wie eine eine Unter- und Oberbacke (59, 60, 62, 64) aufweisende Zange, ausgeht.

11. Vorrichtung nach zumindest einem der Ansprüche 8 bis 10,
**dadurch gekennzeichnet,**
**dass** das Druckelement (28) breiten- und/oder längenveränderbar ausgebildet ist.

12. Vorrichtung nach zumindest einem der Ansprüche 8 bis 11,
**dadurch gekennzeichnet,**
**dass** der Roboter (22) bzw. dessen Arm (24) in einem Bereich mit dem Druckelement (28) verbunden ist, der im schneidlinienzugewandten Randbereich des Druckelementes verläuft.
